# EUROPÄISCHE PATENTSCHRIFT

(11) **EP 0 442 302 B1**
(45) Veröffentlichungstag und Bekanntmachung des Hinweises auf die Patenterteilung: **29.12.1993**
(21) Anmeldenummer: 91100897.7
(22) Anmeldetag: 24.01.1991
(51) Int. Cl.: A01D 59/04, A01F 15/14, A01D 59/00

(54) **Verfahren zum Verbinden zweier Enden eines losen Bindemittels, Bindemechanismus und Bündelmaschine**
Method of tying two ends of a loose binder material, binder mechanism and bundle machine
Procédé pour relier les deux bouts d'un moyen de liaison souple, mécanisme de liaison et machine d'attachement

(30) Priorität: 31.01.1990 US 472853; 02.03.1990 US 487257
(43) Veröffentlichungstag der Anmeldung: 21.08.1991
(73) Patentinhaber: Molitorisz, Joseph, Bellevue, Washington 98006 (US)
(72) Erfinder: Molitorisz, Joseph, Bellevue, Washington 98006 (US)
(74) Vertreter: Feldmann, Bernhard

(56) Entgegenhaltungen:
- DE-C- 426 002
- FR-A- 2 083 243

## Beschreibung

Die Erfindung betrifft ein Verfahren zum Verbinden zweier Enden eines losen Bindemittels, einen Bindemechanismus und eine Bündelmaschine zum Durchführen eines solchen Verfahrens.

Ein Verfahren und Vorrichtungen zum Verbinden zweier Enden eines losen Bindemittels, das einen Gegenstand, nämlich einen Erntegutballen, umspannt, sind z. B. aus den US-A-3,419,300 und US-A-2,926,599 seit langem bekannt und haben sich in der Praxis durchgesetzt. Nach diesem Verfahren werden die beiden Enden eines Garnabschnitts zusamengefügt, mittels eines Knüpfers miteinander verknotet und mittels eines Abstreifers festgezurrt. Insbesondere landwirtschaftliche Erntegüter, aber auch industrielle Verpackungsgüter wie Lumpen, Wolle, Stoffe, Papier, Hölzer und vieles mehr, werden auf diese Weise gebündelt. Bei dem losen Bindemittel handelt es sich um Garn aus Sisal oder Kunststoff, um Schnur oder dergleichen beweglichen Strang ohne konkrete Form, d. h. nicht um Draht.

Dieses Verfahren ist dennoch nachteilig, weil es zu seiner Durchführung auf sehr genau gefertigte und eingestellte Knüpfer mit engen Toleranzen angewiesen ist, die zudem über komplizierte Steuerscheiben und -gestänge synchron mit weiteren Teilen des Bindemechanismus gesteuert werden müssen. Bereits Abweichungen im Material und in der Feuchte des Bindemittels sowie verschlissene und rauhe Oberflächen an den verschiedenen mit dem Bindemittel in Berührung kommenden Teilen des Knüpfers können zu einer Störung im Bindevorgang führen. Ein weiterer Nachteil bei der Durchführung dieses Verfahrens ist darin zu sehen, daß die Enden nicht an dem Gegenstand selbst, sondern in einer Entfernung hierzu verknotet werden, so daß nach dem Entfernen des Knotens aus dem Knüpfer das Bindemittel mit einer geringeren Spannung an dem Gegenstand anliegt. Dies bedeutet, daß sich ein gepreßter Gegenstand nach dem Verlassen eines Preßkanals wieder ausdehnen kann und somit eine andere Länge einnimmt. Preßt man zum Erhalten eines Preßerzeugnisses einer bestimmten Länge aber das Erzeugnis in einer ersten Stufe fester zusammen, wird mehr Energie verbraucht, werden die Festigkeitsanforderungen an den Bindemechanismus höher, und das Preßerzeugnis kann nach dem Verlassen des Preßkanals eine ungewollte Form - Bananenform - einnehmen.

Bei anderen Verfahren wird ein starres Bindemittel, nämlich ein Draht, um den Gegenstand gelegt und an seinen Enden verdrillt.

So offenbart die DE-A-426002 eine Bindevorrichtung für Mähmaschinen, bei der zum Verbinden der Enden des Bindemittels eine Drillvorrichtung verwendet wird. Zum Binden einer Garbe aus Erntegut wird eine Schlaufe des Bindemittels um die Garbe gelegt, die Enden miteinander verdrillt und von dem verbleibenen Bindemittel getrennt.

Zwar ist neben Draht auch Garn als Bindemittel vorgesehen; bei der Verwendung von Garn ist aber nicht ersichtlich, wie die verdrillten Bindemittelenden der auf sie wirkenden Spannung standhalten könnten. Diese Bindevorrichtung ist daher nur bei Draht als Bindemittel praktisch anwendbar.

Dieses Verfahren ist insbesondere in der Landwirtschaft nahezu unanwendbar, weil beim Öffnen eines mit Draht gebundenen Ballens aus Stroh oder Heu das gesamte Drahtstück oder Teile hiervon in das Futter oder zu den Tieren gelangen können und somit die Gefahr besteht, daß Tiere diesen Draht fressen und schließlich daran verenden.

Die der Erfindung zugrunde liegende Aufgabe wird darin gesehen, ein Verfahren zum Verbinden zweier Enden eines um einen Gegenstand gelegten losen Bindemittels vorzuschlagen, das mit einem einfachen, unanfälligen Bindemechanismus durchgeführt werden kann und fest gebundene Gegenstände erbringt.

Diese Aufgabe ist erfindungsgemäß durch die Merkmale des Patentanspruchs 1 bzw. 2 bzw. 7 gelöst worden, wobei in den weiteren Patentansprüchen Merkmale aufgeführt sind, die die Lösung in vorteilhafter Weise weiterentwickeln.

Auf diese Weise wird kein Knoten herkömmlicher Art gebildet, dessen Festigkeit sehr davon abhängt, wie genau er gefertigt wurde, sondern die Enden werden so lange miteinander verdrillt, bis die gewünschte feste Verbindung entstanden ist. Da die zu verdrillenden Strangteile während des Verdrillens insgesamt kürzer werden und versuchen, sich aus dem Bindemechanismus zu lösen, bedarf es zur Beendigung des Binde-, d. h. Verdrillungsvorgangs, keiner separaten Steuerung, sondern das Ende kann durch die Größe der auf die verdrillten Strangteile ausgeübten Haltekraft bestimmt werden. Einstellungen von Abstreifern, Knüpferzungen und die Koordination der Bewegungen aller beteiligten Komponenten entfallen vollkommen oder sind nur noch in einem geringen Maß erforderlich. Aufgrund des Drillvorgangs wird der um den Gegenstand gelegte Abschnitt des Bindemittels immer kürzer und die verdrillten Strangteile legen sich vollkommen auf den Gegenstand auf, so daß dieser fest gespannt wird und gespannt bleibt.

Ein erfindungsgemäßer Bindemechanismus ist einfach in seinem Aufbau, da er außer einem Bindemittelhalter, der auch bei bisherigen Pressen schon verwendet worden ist und das Bindemittel in eine Stellung führt, in der es von der Bindeeinheit erfaßt werden kann, nur noch eine ständig oder in Intervallen in einer Richtung drehende Bindeeinheit erfordert. Entgegen der bisherigen Ausführung von Knüpfapparaten ist der Rahmen mit der Bindeeinheit beweglich und kann sich aufgrund des beim Verdrillen entstehenden Zugs an den zu verdrillenden Strangteilen auf den Gegenstand zubewegen und die Bindemittelenden dort verbinden, wo sie sich nach dem Verlassen der Bindeeinheit auch befinden sollen. Die Spannung auf den Gegenstand läßt daher nach dem Bindevorgang nicht nach. Da das Bindemittel - anders als bei einem herkömmlichen Knüpfer - nicht in einer exakten Stellung eingelegt sein muß, ist ein Bindemittelgreifer ausreichend, der die betreffenden Strangteile irgendwie erfaßt und sie infolge seiner eigenen Drehbewegung verdrillt.

Der Bindemittelgreifer braucht lediglich eine Drehbewegung durchzuführen, die mit einfachsten Antriebsmitteln, z. B. einem Riemen und einer Riemenscheibe oder einem eigenen Motor, z. B. einem Elektromotor, erzeugt werden kann. Der umlaufende Bindemittelgreifer erfaßt die miteinander zu verdrillenden Strangteile des Bindemittels, sobald diese mittels des Bindemittelhalters in seinen Drehbereich geführt werden.

Auf einfache Weise wird das Bindemittel während der Verdrillung festgehalten, wenn es in einen sich verjüngenden und in seiner Weite gegen die Kraft, z. B. einer Feder, veränderbaren Spalt eingeklemmt wird. Die angegebene Formgebung des Bindemittelgreifers und der Bindemittelgreiferscheibe sorgen für eine einwandfreie Bindemittelannahme. Anstatt der Feder, die eine Zug-, eine Teller- oder eine Druckfeder sein kann, ist auch die Verwendung eines Druckmittelkraftspeichers möglich, der sogar fremdgesteuert werden kann.

Die Haltekraft, die auf die zu verdrillenden Strangteile des Bindemittels wirkt und bestimmt, wie lange diese miteinander verdrillt werden, kann den unterschiedlichen Gegebenheiten angepaßt werden, wenn der Bindemittelgreifer mittels eines Spannteils auf die Bindemittelgreiferscheibe gepreßt wird, dessen Vorspannung variabel ist.

Vorteilhafterweise wird das erfindungsgemäße Verfahren mit einer Bündelmaschine in der Form einer landwirtschaftlich nutzbaren Ballenpresse durchgeführt, da dort die Einsatzbedingungen sehr unterschiedlich sind und die Einwirkung der Umgebungsfaktoren bei herkömmlichen Bindevorrichtungen leicht zu Störungen führen; die erreichbaren Vorteile sind somit dort am größten.

In der Zeichnung ist ein nachfolgend näher beschriebenes Ausführungsbeispiel der Erfindung dargestellt.

Es zeigt:
- Fig. 1: einen Ausschnitt einer Bündelmaschine in Seitenansicht mit einem erfindungsgemäßen Bindeapparat,
- Fig. 2: den Bindeapparat und einen Bindemittelhalter aus Figur 1 in Draufsicht,
- Fig. 3: den Bindeapparat in Seitenansicht,
- Fig. 4a, 4b, 4c, 4d: verschiedene Stationen beim Bilden einer Bindemittelverbindung und
- Fig. 5, 5b: die Stellung des Bindeapparates in Bezug auf einen Gegenstand während des Bildens einer Bindemittelverbindung.

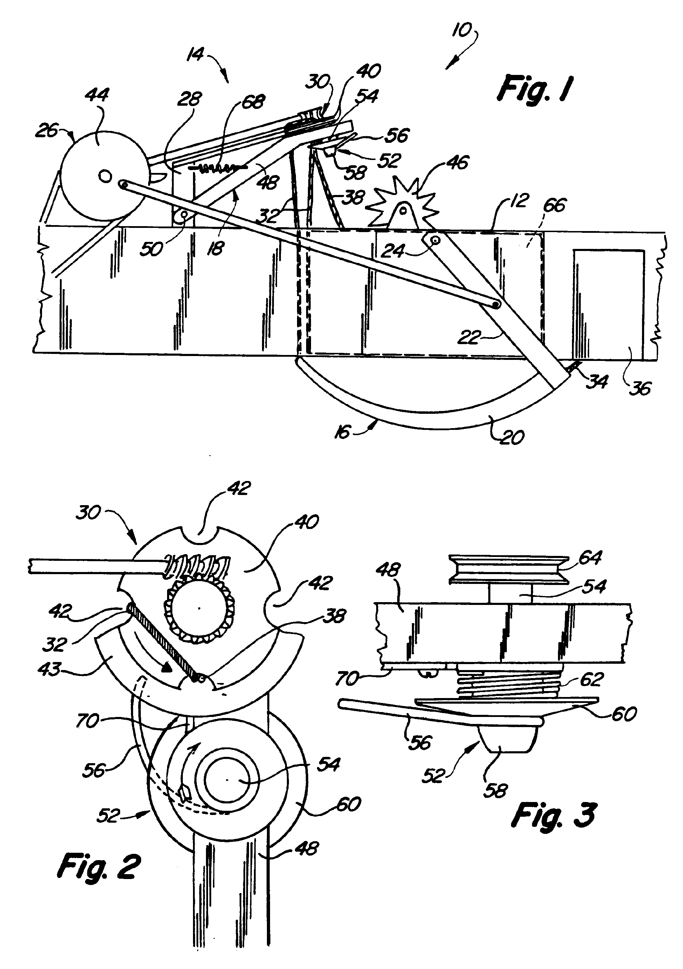

Aus Figur 1 geht eine Bündelmaschine 10 in der Art einer landwirtschaftlich verwendbaren Ballenpresse für rechteckförmige Ballen hervor. Es könnte sich ebenso um eine Presse für Rundballen oder eine industrielle Presse handeln. Darüber hinaus kann anstatt einer Presse eine Bündelmaschine verwendet werden, die ein Erzeugnis nicht preßt, sondern es nur bindet. Diese Bündelmaschine 10 enthält einen Preßkanal 12 mit einem Bindemechanismus 14, der eine Bindemittelzuführvorrichtung 16 und einen Bindeapparat 18, der als Drillapparat ausgebildet ist, enthält. Der Bindemechanismus 14 schlingt das Bindemittel 34 um einen Gegenstand 66, nämlich einen Ballen vorbestimmter Länge aus Erntegut, das in dem Preßkanal 12 zusammengepreßt wurde.

Die Bindemittelzuführvorrichtung 16 ist mehr oder weniger herkömmlich ausgebildet und enthält eine Nadel 20, die in einer üblichen Ruhestellung unterhalb der Preßkammer 12 gezeigt ist. Die Nadel 20 ist an einem Tragrahmen befestigt, der in einem Lager 24 an dem Preßkanal 12 vertikal schwenkbar angebracht ist, um es so einem Antriebsmechanismus 26 zu ermöglichen, den Tragrahmen periodisch so zu verschwenken, daß die Nadel 20 quer durch den Preßkanal 12 aus einem später erläuterten Grund zugeführt werden kann. Die Bindemittelzuführvorrichtung 16 enthält darüber hinaus einen ortsfesten Rahmen 28, der auf die Oberseite des Preßkanals 12 montiert ist und einen Bindemittelhalter 30 oder eine Fadenklemme trägt, und zwar in einer Stellung, in der er einen Strangteil 32 des Bindemittels 34 von der Nadel 20 annehmen kann, wenn diese quer durch den Preßkanal 12 geführt worden ist. Das Bindemittel 34 wird dabei von einer Vorratsrolle in einem Behälter 36 abgezogen, der von der Bündelmaschine 10 getragen wird, und es weist einen Strangteil 38 an dem freien Ende auf, das von dem Bindemittelhalter 30 gehalten wird.

Der Bindemittelhalter 30 enthält mehrere Scheiben 40, die drehbar auf einer gemeinsamen Welle montiert sind, wobei jede der Scheiben 40 vier Kerben 42 trägt, die jeweils ca. 90° über den Umfang der Scheiben 40 voneinander entfernt sind. Der Bindemittelhalter 30 ist zudem mit einem Druckarm 43 versehen, der sich zwischen den Scheiben 40 befindet und mit diesen einen Druck auf die dagegen angelegten Strangteile 32, 38 des Bindemittels 34 ausübt, um diese fest über einen Schwenkbereich der Scheiben 40 von 180° zu halten, bevor sie wieder losgelassen werden. Die Scheiben 40 sind in einer allgemein bekannten Weise angetrieben, um eine Ein-Viertel-Bewegung in Übereinstimmung mit der Bewegung der Nadel 20 durchzuführen; dabei werden die Kerben 42 richtig in Stellung gebracht, so daß sie den von der Nadel 20 herangeführten Strangteil 32 annehmen können und während einer weiteren Ein-Viertel-Umdrehung die beiden Strangteile 32, 38 des Abschnitts des Bindemittels 34 in einen Arbeitsbereich des Bindeapparats 18 abgeben können.

Die gleichlaufende, d. h. synchrone, Bewegung der Nadel 20 und der Scheiben 40 wird mittels einer Kupplung 44 erzeugt, die beide steuert und von einer Ballenlängensteuerung geöffnet wird, von der nur ein Stern- oder Zackenrad 46 gezeigt ist. Das Sternrad 46 ist so angeordnet, daß es während des Bildens eines Gegenstands 66, also des Ballens, und während dieser durch den Preßkanal 12 geschoben wird, gedreht wird. Die Kupplung 44 und die Ballenlängensteuerung können in einer Weise ausgeführt werden, wie sie aus der US-A-3,931,760 ersichtlich ist, während der Bindemittelhalter 30 dem in der US-A-2,723,871 oder der US-A-2,926,599 nachgebildet sein kann.

Der Bindeapparat 18 enthält einen Rahmen 48, der in diesem Fall an dem ortsfesten Rahmen 28 vertikal schwenkbar angebracht ist, damit er sich von dem letztgenannten weg bzw. zu diesem hin um eine horizontale, querverlaufende Lagerachse 50 bewegen kann. Der Bindeapparat 18 enthält ferner eine als Drilleinheit ausgebildete Bindeeinheit 52, die eine aufrecht oder im wesentlichen aufrecht stehende Spindel 54 enthält, die wiederum drehbar an bzw. in dem Rahmen 48 befestigt ist, und zwar an einer Stelle, die es dem Bindemittelhalter 30 ermöglicht, das gehaltene Bindemittel 34 in den Wirkungsbereich eines Bindemittelgreifers 56 abzugeben.

Der Bindemittelgreifer 56 ist als Draht oder Stange ausgebildet und erstreckt sich leicht spiralförmig von einem unteren Bereich der Spindel 54 fort, der sein inneres Ende aufnimmt und drehfest hält. Die Verbindung zwischen dem Bindemittelgreifer 56 und der Spindel 54 erfolgt über eine Mutter 58, die auf den Sockel der Spindel 54 aufgeschraubt ist und dabei das innere Ende des Bindemittelgreifers 56 gegen eine nach oben gewölbte konische Bindemittelgreiferscheibe 60 drückt, die wiederum mittels eines Spannteils 62 nach unten gegen den Bindemittelgreifer 56 gedrückt wird. Der als Schraubendruckfeder ausgebildete Spannteil 62 wird auf der Spindel 54 zwischen der Bindemittelgreiferscheibe 60 und dem Rahmen 48 eingespannt. Demzufolge kann die von dem Spannteil 62 ausgehende Druckkraft, die sich auf die Verbindung zwischen dem Bindemittelgreifer 56 und der Bindemittelgreiferscheibe 60 auswirkt, durch eine Veränderung der Lage der Mutter 58 auf der Spindel 54 variiert werden.

Am besten kann aus Figur 3 entnommen werden, daß der Bindemittelgreifer 56 von einer Stelle im Bereich der Bindemittelgreiferscheibe 60 zu einer Stelle außerhalb von dieser geringfügig von seiner üblichen Erstreckungsrichtung abweicht, und zwar nach oben, also divergierend. Auf den oberen Bereich der Spindel 54 ist eine Riemenscheibe 64 drehfest aufgesetzt, so daß ein nicht gezeigter Antriebsriemen die Spindel 54 mit einer entsprechenden Antriebsquelle verbinden kann, um sie entweder kurzzeitig oder ständig anzutreiben. Mit diesem Antrieb wird das erforderliche Drillen bzw. Verwinden der Strangteile 32, 38 erzeugt, um eine selbsthaltende und fest gebundene Schlaufe um den Gegenstand 66 zu erzeugen, der in diesem Ausführungsbeispiel in dem Preßkanal 12 gepreßt worden ist.

Der schwenkbare Rahmen 48 des Bindeapparats 18 wird in seiner oberen Bereitschaftsstellung mittels eines in diesem Ausführungsbeispiel dehnbaren und als Zugfeder ausgebildeten Spannelements 68 gehalten, dessen sich gegenüberliegenden Enden an dem ortsfesten Rahmen 28 bzw. dem Rahmen 48 gehalten sind. Hier könnte jedoch auch ein hydraulischer Stoßdämpfer oder ein gesteuerter Druckmittelmotor verwendet werden. Das Spannelement 68 baut auch die notwendige Zugkraft in den Strangteilen 32, 38 während des Drillvorgangs auf, wie dies nachfolgend im einzelnen dargelegt ist.

Auf dem Rahmen 48 ist ein Messer 70 vorgesehen, dessen Schneidkante so gelegen ist, daß sie mit dem Zugvorgang des Bindemittelgreifers 56 und der Bindemittelgreiferscheibe 60 auf das Bindemittel 34 zusammenwirkt und dabei die Strangteile 32, 38 zwischen der Bindemittelgreiferscheibe 60 und dem Bindemittelhalter 30 abschneidet.

Das Verfahren zum Bilden einer festen Schlaufe aus einem Abschnitt des Bindemittels 34 um einen Gegenstand 66 wird des weiteren in Verbindung mit den Figuren 4a - 5b erläutert, wobei nochmals klargestellt wird, daß auch andere Güter als Ballen, insbesondere Erntegutballen, mit einem entsprechenden Bindeapparat 18 gebunden werden können.

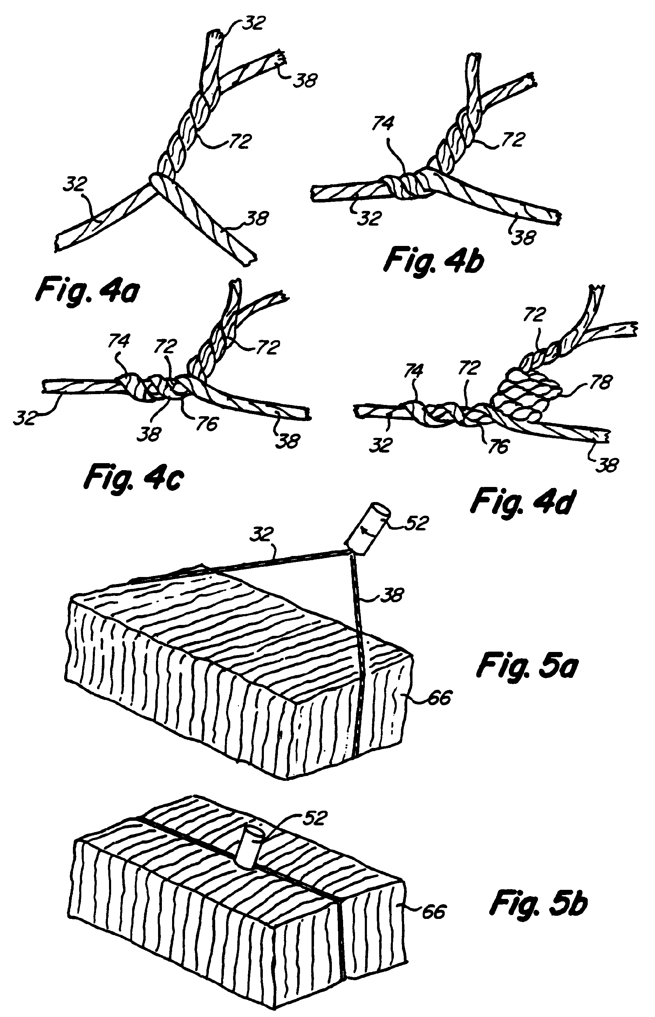

Beginnt man mit dem Preßvorgang der Bündelmaschine 10 in einem Stadium, in dem mit der Bildung eines neuen Gegenstands 66 (Ballen) gerade begonnen wird, dann befindet sich die Nadel 20 unterhalb des Preßkanals 12, und ein Abschnitt des Bindemittels 34 erstreckt sich von ihr an dem voreilenden Ende des sich bildenden Gegenstands 66 entlang bis zu dem Strangteil 38 an dem freien Ende des Abschnitts des Bindemittels 34, der von dem Bindemittelhalter 30 gehalten wird. Während sich der sich bildende Gegenstand 66 zu dem rückwärtigen Ende des Preßkanals 12 weiter bewegt, wird das Bindemittel 34 von der Vorratsrolle in dem Behälter 36 abgezogen und erstreckt sich schließlich entlang der Oberseite, der voreilenden Endfläche und dem Boden des Gegenstands 66. Sobald der Gegenstand 66 eine vorbestimmte Länge erreicht hat, die von dem Sternrad 46 gemessen wurde, wird der Antriebsmechanismus 26 für die Nadel 20 und den Bindemittelhalter 30 zugeschaltet, um die Nadel 20 quer durch den Preßkanal 12 zu führen und den Strangteil 32 in eine der Kerben 42 der Scheiben 40 neben den Strangteil 38 einzulegen. Die paar Scheiben 40 werden um 90° weiter gedreht, während die Nadel 20 wieder in ihre Bereitschaftsstellung zurückgeschwenkt wird. Der Bindemechanismus 14 befindet sich dann in dem in Figur 1 gezeigten Zustand, in dem die Bindeeinheit 52 ebenfalls ihre von dem Gegenstand 66 nach oben entfernte Bereitschaftsstellung einnimmt; diese Stellung entspricht der in Figur 5a schematisch dargestellten.

Daraufhin wird die Spindel 54 gedreht, was dazu führt, daß der Bindemittelgreifer 56 die Strangteile 32, 38 ergreift, sie zwischen die Bindemittelgreiferscheibe 60 und seinen inneren Endbereich zieht und dort einklemmt. Zur gleichen Zeit werden die Strangteile 32, 38 gegen die Schneidkante des Messers 70 geführt, so daß sie zwischen dem Bindemittelhalter 30 und der Bindeeinheit 52 abgeschnitten werden. Ein weiteres Drehen bzw. Betätigen der Bindeeinheit 52 führt zu den betreffenden Zustandsformen, wie sie in den Figuren 4a - 4d gezeigt sind. Die Drehbewegung der Spindel 54 mit der Bindeeinheit 52 wird fortgesetzt.

Insbesondere aus Figur 4a geht hervor, wie in einer ersten Stufe des Drillvorgangs die einzelnen Strangteile 32, 38 zu einem doppelten Strangteil 72 gedrillt sind. Wenn der Drillvorgang in einer in Figur 4b gezeigten Stufe fortgesetzt wird, nähert sich der Winkel zwischen den beiden einfachen Strangteilen 32, 38 der Größe von 180°, je mehr die Spannung des Bindemittels 34 zunimmt. Die gegenseitige Beeinflussung des sich vergrößernden Winkels und der sich erhöhenden Spannung in den beiden Strangteilen 32, 38 des Bindemittels 34 führt dazu, daß der doppelte Strangteil 72 auf den Strangteil 38 zugezogen wird. Dies resultiert in einer überschlagenen Windung 74 des doppelten Strangteils 72 um den Strangteil 38 in einen dreifachen Strangteil 76, dessen Windungsrichtung umgekehrt zu der des doppelten Strangteils 72 verläuft - der letztgenannte Zustand ist in Figur 4c gezeigt.

Figur 4d zeigt die letzte Stufe des Bindeprozesses, wenn sich unter der wachsenden Torsionskraft in dem doppelten Strangteil 72 und mit der zunehmenden Spannung in den Strangteilen 32, 38 eine Wicklung 78 des doppelten Strangteils 72 aufbaut. Wenn dieses Stufe erreicht ist, wird die Haltekraft zwischen dem Bindemittelgreifer 56 und der Bindemittelgreiferscheibe 60 der Bindeeinheit 52 des Bindeapparats 18 überschritten von der Kraft, die sich in dem Bindemittel 34 aufgebaut hat, und die Strangteile 32, 38 werden aus ihrer Halterung befreit. Zu einem Zeitpunkt kurz bevor die Strangteile 32, 38 befreit werden, hat sich die Bindeeinheit 52 an den Gegenstand 66 angelegt (Figur 5b), wobei sie in diese Stellung entgegen der Kraft des Spannelements 68 infolge des fortschreitenden Kürzerwerdens der Strangteile 32, 38 beim Drillvorgang gezogen wurde. Es ist demnach erkennbar, daß die Spannung des Spannelements 68 eine entsprechende, angemessene Spannung in den Strangteilen 32, 38 aufrecht erhält, wenn letztere miteinander verdrillt wurden. Sobald die Strangteile 32, 38 aus der Bindeeinheit 52 befreit sind, zieht das gestreckte Spannelement 68 die Bindeeinheit 52 in ihre Bereitschaftsstellung nach oben zurück (Fig. 1 und 5a). Zu diesem Zeitpunkt ist das Bindemittel 34 fest um den Gegenstand 66 gespannt, wobei die Wicklung 78 und der zurück gedrillte, dreifache Strangteil 76 zusammenwirken, um ein Aufdrehen der gedrillten Strangteile 32, 38 des Bindemittels 34 zu vermeiden.

## Patentansprüche

1. Verfahren zum Verbinden zweier Enden eines um einen Gegenstand (66), insbesondere um einen Ballen aus Preßgut, gelegten losen Bindemittels (34), wobei an jedem Ende des Bindemittels (34) ein Strangteil (32, 38) vorgesehen ist, mit folgenden Verfahrensschritten:
a) die beiden Strangteile (32, 38) werden zusammengelegt,
b) die beiden Strangteile (32, 38), werden miteinander verdrillt, bis sie einen doppelten Strangteil (72) ergeben, der zu einer gespannten Schlinge des Bindemittels (34) führt,
c) der Drillvorgang wird fortgesetzt, so daß sich einer der einfachen Strangteile (32, 38) um den doppelten Strangteil (72) wickelt, um einen dreifachen Strangteil (76) zu bilden, wobei die Richtung und der Drehsinn der Windung des doppelten Strangteils (72) und des betreffenden Strangteils (32, 38) entgegengesetzt zu der Richtung und dem Drehsinn der Verdrillung des ersten mit dem zweiten Strangs (32, 38) zu dem doppelten Strangteil (72) verläuft, so daß sich eine Knüpfwirkung ergibt, und
d) der Drillvorgang des doppelten Strangteils (72) wird fortgesetzt, um mit einem Teil davon, der nicht in dem dreifach gedrillten Strangteil (76) enthalten ist, eine Windung (78) zu bilden, bis das Bindemittel (34) straff an dem Gegenstand (66) anliegt.

2. Bindemechanismus (14) zum Verbinden zweier Enden eines um einen Gegenstand (66), insbesondere um einen Ballen aus Preßgut, gelegten losen Bindemittels (34), mit einem Rahmen (48), einer darin drehbar gelagerten Bindeeinheit (52) und einem Bindemittelgreifer (56), dadurch gekennzeichnet, daß
a) der Rahmen (48) gegen eine Kraft, insbesondere gegen die Kraft eines Spannelements (68), aus einer ersten von dem Gegenstand (66) entfernten in eine zweite, dem Gegenstand (66) nahe Stellung bewegbar ist,
b) die drehbare Bindeeinheit (52) für eine vorbestimmte Dauer und/oder Anzahl von Umdrehungen um ihre Drehachse antreibbar ist und
c) daß der Bindemittelgreifer (56) in eine Stellung bringbar ist, in der er zwei Strangteile (32, 38) an den beiden Enden erfaßt und mit einer vorbestimmbaren Kraft während der Drehbewegung reibschlüssig hält, wobei sich die Größe der Kraft nach dem Widerstand richtet, der entsteht, bis nach einem doppelt und einem dreifach gedrillten Strangteil (72) und (76) eine Windung (78) an dem doppelten Strangteil (76) erzeugt ist.

3. Bindemechanismus nach Anspruch 2, dadurch gekennzeichnet, daß die Bindeeinheit (52) einen Bindemittelgreifer (56) enthält, der auf einer Spindel (54) drehfest montiert ist und sich von der Spindel (54) nach außen erstreckt.

4. Bindemechanismus nach Anspruch 3, dadurch gekennzeichnet, daß die Bindeeinheit (52) eine Bindemittelgreiferscheibe (60) enthält, die konisch ausgebildet und mit, insbesondere neben, dem Bindemittelgreifer (56) auf der Spindel (54) montiert ist, wobei der Bindemittelgreifer (56) zur Oberfläche der Bindemittelgreiferscheibe (60) geneigt ist, um einen sich verjüngenden Spalt zu bilden, in dem die zum Verdrillen vorgesehenen Strangteile (32, 38) aufgenommen und gehalten werden.

5. Bindemechanismus nach Anspruch 3 oder 4, dadurch gekennzeichnet, daß die Bindeeinheit (52) einen Spannteil (62) enthält, der die Bindemittelgreiferscheibe (60) und den Bindemittelgreifer (56) aneinander preßt.

6. Bindemechanismus nach Anspruch 5, dadurch gekennzeichnet, daß der Spannteil (62) zur Änderung seiner Spannkraft einstellbar ist.

7. Bündelmaschine, insbesondere landwirtschaftliche Ballenpresse, zum Umschlingen von Erntegütern mit Bindemittel (34) mit einem Bindemechanismus (14) nach einem oder mehreren der Ansprüche 2 bis 6.

## Claims

1. Method of tying together two ends of a loose binding material (34) placed around an object (66), in particular around a bale of compressed material, a strand portion (32, 38) being provided at each end of the binding material (34), the method having the following steps:
a) the two strand portions (32, 38) are placed together,
b) the two strand portions (32, 38) are twisted together with one another until they produce a double strand portion (72) which results in a tensioned loop of the binding material (34),
c) the twisting operation is continued, so that one of the single strand portions (32, 38) winds around the double strand portion (72) to form a triple strand portion (76), the direction and the sense of the winding of the double strand portion (72) and the relevant strand portion (32, 38) extending opposite to the direction and the sense of the twisting of the first with the second strand (32, 38) to form the double strand portion (72), so that a tying effect results, and
d) the operation of twisting of the double strand portion (72) is continued, in order to form a coil (78) with a part thereof not contained in the triple-twisted strand portion (76), until the binding material (34) bears tautly against the object (66).

2. Binding mechanism (14) for tying together two ends of a loose binding material (34) placed around an object (66), in particular around a bale of compressed material, with a frame (48), a binding unit (52) rotatably mounted therein and a binding material gripper (56), characterised in that
a) the frame (48) is movable against a force, in particular against the force of a tensioning element (68), out of a first position remote from the object (66) into a second position close to the object (66),
b) the rotatable binding unit (52) can be driven for a predetermined length of time and/or number of revolutions about its axis of rotation and
c) the binding material gripper (56) can be brought into a position in which it grips two strand portions (32, 38) at both ends and holds them in frictional contact with a predeterminable force during the rotary movements, the magnitude of the force depending on the resistance created until, after a double-twisted and a triple-twisted strand portion (72) and (76), a coil (78) is produced on the double strand portion (72).

3. Binding mechanism according to claim 2, characterised in that the binding unit (52) includes a binding material gripper (56) mounted to be fast in rotation on a spindle (54) and extending outwardly from the spindle (54).

4. Binding mechanism according to claim 3, characterised in that the binding unit (52) includes a binding material gripper disc (60) which is of conical form and is mounted with, in particular next to, the binding material gripper (56) on the spindle (54), the binding material gripper (56) being inclined towards the surface of the binding material gripper disc (60) in order to form a tapering gap in which the strand portions (32, 38) intended for twisting together are received and held.

5. Binding mechanism according to claim 3 or 4, characterised in that the binding unit (52) contains a biasing element (62) which presses the binding material gripper disc (60) and the binding material gripper (56) against one another.

6. Binding mechanism according to claim 5, characterised in that the biasing element (62) is adjustable for varying its biasing force.

7. Bundling machine, in particular an agricultural baling press, for looping binding material (34) around harvested materials, with a binding mechanism (14) according to one or more of claims 2 to 6.

## Revendications

1. Procédé pour relier les deux bouts d'un moyen de liage lâche (34) posé autour d'un objet (66), en particulier d'une balle de produit compacté, un tronçon de corde (32, 38) étant présent à chaque extrémité du moyen de liage (34), **comprenant** les étapes suivantes :
a) les deux tronçons de corde (32, 38) sont réunis,
b) les deux tronçons de corde (32, 38) sont conjointement torsadés, jusqu'à l'obtention d'un tronçon de corde double (72), qui mène à une boucle tendue du moyen de liage (34),
c) le torsadage est poursuivi, de sorte qu'un des tronçons de corde simple (32, 38) s'enroule autour du tronçon de corde double (72) pour former un tronçon de corde triple (76), la direction et le sens de rotation de l'enroulement du tronçon de corde double (72) et du tronçon de corde concerné (32, 38) étant opposés à la direction et au sens de rotation du torsadage du premier tronçon (32) avec le second tronçon (38) en vue de former le tronçon de corde double (72), de sorte qu'on obtient un effet de nouage, et
d) le torsadage du tronçon de corde double (72) est poursuivi afin de former un enroulement (78) avec une partie de ce tronçon qui n'est pas contenue dans le tronçon de corde à triple torsadage (76), jusqu'à ce que le moyen de liage (34) se raidisse contre l'objet (66).

2. Mécanisme de liage (14) pour relier les deux bouts d'un moyen de liage lâche (34) posé autour d'un objet (66), en particulier d'une balle de produit compacté, avec un carter (48), une unité de liage (52) montée à rotation dans ce carter, et un preneur de moyen de liage (56), **caractérisé** en ce que
a) le carter (48) peut être déplacé, à l'encontre d'une force, notamment de la force d'un élément tendeur (68), d'une première position éloignée de l'objet (66) dans une seconde position proche de l'objet (66),
b) l'unité de liage rotative (52) peut être entraînée pour une durée prédéterminée et/ou un nombre prédéterminé de révolutions autour de son axe de rotation,
c) et en ce que le preneur de moyen de liage (56) peut être amené dans une position dans laquelle il saisit aux deux extrémités deux tronçons de corde (32, 38) et les maintient par friction avec une force prédéterminable pendant le mouvement de rotation, la valeur de la force étant fonction de la résistance qui apparaît jusqu'à ce que soit produit, après un tronçon de corde à double torsadage (72) et un tronçon de corde à triple torsadage (76), un enroulement (78) sur le tronçon de corde double (72).

3. Mécanisme de liage selon la revendication 2, **caractérisé** en ce que l'unité de liage (52) comprend un preneur de moyen de liage (56), qui est monté en rotation solidaire sur un arbre (54) et s'étend vers l'extérieur à partir de l'arbre (54).

4. Mécanisme de liage selon la revendication 3, **caractérisé** en ce que l'unité de liage (52) comprend un disque preneur de moyen de liage (60), de forme conique et monté avec le preneur de moyen de liage (56) sur l'arbre (54), notamment à côté de ce preneur, le preneur (56) étant incliné vers la surface du disque preneur (60) afin de former une fente, allant en se rétrécissant, dans laquelle sont reçus et maintenus les tronçons de corde (32, 38) à torsader.

5. Mécanisme de liage selon la revendication 3 ou 4, **caractérisé** en ce que l'unité de liage (52) comprend un élément de serrage (62), qui serre l'un contre l'autre le disque preneur de moyen de liage (60) et le preneur de moyen de liage (56).

6. Mécanisme de liage selon la revendication 5, **caractérisé** en ce que l'élément de serrage (62) peut être réglé afin de modifier sa force de serrage.

7. Lieuse, notamment presse agricole à balles, destinée à lier un moyen de liage (34) autour de produits récoltés, avec un mécanisme de liage (14) selon l'une quelconque des revendications 2 à 6.
